# EUROPEAN PATENT APPLICATION

(11) **EP 3 730 386 A1**
(43) Date of publication of application: **28.10.2020**
(21) Application number: 20163508.3
(22) Date of filing: 17.03.2020
(51) Int. Cl.: B62D 15/02, G08G 1/16

(54) **TRAVEL CONTROL APPARATUS, TRAVEL CONTROL METHOD AND COMPUTER PROGRAM PRODUCT**

(30) Priority: 23.04.2019 JP 2019081939
(71) Applicant: Mazda Motor Corporation, Hiroshima 730-8670 (JP)
(72) Inventor: TADA, Kenta, Fuchu-cho, Aki-gun,, Hiroshima 730-8670 (JP)
(74) Representative: Müller-Boré & Partner Patentanwälte PartG mbB

(57) **Abstract**

A travel control apparatus D is an apparatus having an avoidance steering function for controlling steering so as to avoid contact and/or abnormal approach of a host vehicle with respect to another vehicle traveling in a lane that is a destination of change when the host vehicle changes lanes. The travel control apparatus D includes: a radar apparatus 1 and a detection processing unit 52 serving as one example of an other-vehicle detecting unit configured to detect whether the other vehicle is present and further detect a movement of the other vehicle when the other vehicle is present; and a function stopping unit 54 configured to stop the avoidance steering function when one of a case where a position of the other vehicle after an elapse of a predetermined period acquired based on a detection result of the radar apparatus 1 and the detection processing unit 52 is in a determination region that is a region extending in an extending direction of a host lane, on a vehicle-width-direction outer side of the host vehicle, and in the host lane, and a case where the position of the other vehicle has passed the determination region occurs, the host lane being a lane in which the host vehicle travels.

## Description

### BACKGROUND OF THE INVENTION

### Field of the Invention

The present disclosure relates to a travel control apparatus, a travel control method and a computer program product for controlling the travel of a vehicle.

### Description of the Related Art

In recent years, in order to realize comfortable and suitable transportation, travel controlling functions such as a lane departure preventing function for controlling the travel so as not to depart from a lane and a following travel function for controlling the travel so as to follow a preceding vehicle, for example, have been researched and developed. As one of those functions, a function for avoiding contact and/or abnormal approach (e.g., approach that may cause contact) with another vehicle traveling in a lane that is the destination of the change when a host vehicle changes lanes is known. Such a function for avoiding contact and/or abnormal approach is disclosed in Japanese Patent Laid-Open No. 2008-56136 and Japanese Patent Laid-Open No. 2010-30425, for example.

A system disclosed in Japanese Patent Laid-Open No. 2008-56136 detects a peripheral vehicle and detects the will of lane change. Then, when the will of lane change to the direction of the peripheral vehicle is detected when it is determined that an abnormal approach with the detected peripheral vehicle occurs when the lane is changed, the system limits the steering to the direction of the peripheral vehicle.

A travel control apparatus disclosed in Japanese Patent Laid-Open No. 2010-30425 detects a side object on the side of the host vehicle, and estimates a later lateral position to be reached by the host vehicle with respect to the traveling lane after a predetermined period. When the later lateral position reaches a predetermined threshold while the side object is being detected, the travel control apparatus suppresses the lateral movement of the host vehicle to the side of the side object. More specifically, the travel control apparatus generates a yaw moment to the left direction in accordance with a braking force difference between left and right wheels in order to suppress the lane change of the host vehicle to the right direction, for example (see paragraph [0035] of Japanese Patent Laid-Open No. 2010-30425) .

### SUMMARY OF THE INVENTION

In order to avoid contact and/or abnormal approach between a host vehicle and another vehicle traveling in a lane that is the destination of the change during the lane change, a method may be conceived, which includes controlling the steering from the traveling lane of the host vehicle toward the lane that is the destination of the change to be returned to the traveling lane of the host vehicle, in addition to the limitation of the steering as disclosed in Japanese Patent Laid-Open No. 2008-56136 and the suppression of the lateral movement as disclosed in Japanese Patent Laid-Open No. 2010-30425.
In such a method, for instance, when a driver of the host vehicle attempts changing lanes by operating a steering wheel of the host vehicle, the steering may be controlled so that the host vehicle goes back to the traveling lane of the host vehicle. For more specific example, a method may be conceived, which includes controlling, when the lane is changed to the left lane, the steering toward the left to be returned to the right. In other words, the steering may be controlled back to the right when the driver of the host vehicle attempts changing lanes from the left to the right.

In such a case as mentioned above, there may be a fear that a driver (and/or a passenger) on the other vehicle may feel discomfort as the traveling direction of the host vehicle changes. For example, the driver (and/or the passenger) on the other vehicle may feel danger by the approach with the host vehicle, and/or may be surprised or feel anxious due to the difference from the predicted (e.g., expected) traveling direction of the host vehicle. In particular, when the host vehicle travels in a manner that is unpredictable for the driver of the other vehicle, a risk of accident between the host vehicle and the other vehicle may increase.

Accordingly, in some circumstances, controlling, in order to avoid contact and/or abnormal approach, the steering of a host vehicle back to the traveling lane of the host vehicle when the host vehicle attempts changing lanes may increase a risk of accident between the host vehicle and the other vehicle.

Thus, according to an aspect, the problem relates to reducing a risk of accident between the host vehicle and the other vehicle where the host vehicle has a function of controlling the steering of the host vehicle for avoiding contact and/or abnormal approach with another vehicle when the host vehicle attempts changing lanes. In other words, the problem relates to improving safety for the host vehicle and the other vehicle when the host vehicle changes lanes.

This problem is solved by the features disclosed by the independent claims. Further exemplary embodiments are defined by the dependent claims.

The inventor has found that, as a result of various studies, the above-mentioned object may be achieved by the present disclosure.

According to an aspect, a travel control apparatus is provided. The travel control apparatus has an avoidance steering function for controlling steering, when a host vehicle changes lanes, so as to avoid contact and/or abnormal approach of the host vehicle with respect to another vehicle traveling in a lane that is a destination of change for the host vehicle. The travel control apparatus comprises:
an other-vehicle detecting unit configured to detect whether the other vehicle is present and further detect a movement of the other vehicle when the other vehicle is present; and
a function stopping unit configured to stop the avoidance steering function in one of the following cases:
   a position of the other vehicle after an elapse of a specified time period is in a determination region, the specified time period being acquired based on a detection result of the other-vehicle detecting unit, the determination region being a region that is in a host lane on an outer side of the host vehicle in a vehicle-width-direction and that extends in an extending direction of the host lane, the host lane being a lane in which the host vehicle travels; or
   the position of the other vehicle has passed the determination region.

In some circumstances, a travel control apparatus according to one aspect may be an apparatus having an avoidance steering function for controlling steering so as to avoid at least one of contact and/or abnormal approach of a host vehicle with respect to another vehicle traveling in a lane that is a destination of change when the host vehicle changes lanes, the travel control apparatus including: an other-vehicle detecting unit configured to detect whether the other vehicle is present and further detect a movement of the other vehicle when the other vehicle is present; and a function stopping unit configured to stop the avoidance steering function when one of a case where a position of the other vehicle after an elapse of a predetermined period acquired based on a detection result of the other-vehicle detecting unit is in a determination region that is a region extending in an extending direction of a host lane, on a vehicle-width-direction outer side of the host vehicle, and in the host lane, and a case where the position of the other vehicle has passed the determination region occurs, the host lane being a lane in which the host vehicle travels.

In various aspects and embodiments described herein, the term "predetermined period" may be understood as a time period that is specified or determined before the time period is used in a process carried out by the travel control apparatus.

The travel control apparatus as stated above can stop the avoidance steering function when the position of the other vehicle after the elapse of a predetermined period is in the determination region or has passed the determination region, and hence the control that returns the steering from the traveling lane of the host vehicle toward the lane that is the destination of the change to the traveling lane of the host vehicle in order to avoid contact and/or abnormal approach between the host vehicle and the other vehicle at the time of the lane change can be stopped. Therefore, with the travel control apparatus, it may be likely that the host vehicle travels in a predictable manner for a driver of the other vehicle, thereby reducing the risk of accident between the host vehicle and the other vehicle. Thus, the travel control apparatus can improve safety for the host vehicle and the other vehicle. In some circumstances, the travel control apparatus can also reduce the discomfort of the passenger on the other vehicle.

In some exemplary embodiments, the determination region may be set ahead of the host vehicle and/or behind the host vehicle.

Further, in some exemplary embodiments, in the travel control apparatus, the determination region is set to at least one of a place ahead of the host vehicle and a place behind the host vehicle.

In the lane change while traveling, the lane may be changed to the opposite lane in order to overtake the preceding vehicle. When the avoidance steering unit controls the host vehicle for the other vehicle traveling in the opposite lane, the determination region used by the function stopping unit may need to be set to a place ahead of the host vehicle. Meanwhile, on a road having a plurality of lanes on one side, the lane may be changed to the adjacent lane in order to switch lanes in the lane change while traveling. When the avoidance steering unit controls the host vehicle for the other vehicle traveling in the adjacent lane, the determination region used by the function stopping unit may need to be set to a place behind the host vehicle. In the travel control apparatus, the determination region may be set to at least one of a place ahead of the host vehicle and a place behind the host vehicle, and hence the function stopping unit can be combined with at least of the avoidance steering unit that controls the host vehicle for the other vehicle traveling in the opposite lane, and the avoidance steering unit that controls the host vehicle for the other vehicle traveling in the adjacent lane.

In some exemplary embodiments, the function stopping unit may be further configured to stop the avoidance steering function when, based on the detection result of the other-vehicle detecting unit, the other vehicle is present on a side of the host vehicle in a direction opposite from a direction of lane change of the host vehicle.

Further, in some exemplary embodiments, in the travel control apparatus according to the above-stated aspect, the function stopping unit may be further configured to stop the avoidance steering function when the other vehicle is present on a side of the host vehicle in a direction opposite from a direction of lane change of the host vehicle based on the detection result of the other-vehicle detecting unit.

The travel control apparatus as stated above may cause the avoidance steering unit to stop the control of the steering when the other vehicle is present on the side of the host vehicle. This may prevent the host vehicle from traveling in an unpredictable manner for a driver of the other vehicle, thereby reducing the risk of accident between the host vehicle and the other vehicle. Thus, safety for the host vehicle and the other vehicle may be improved. Further, in some circumstances, with the travel control apparatus as stated above, the discomfort of the passenger on the other vehicle on the side of the host vehicle can also be reduced.

In some exemplary embodiments, in the travel control apparatus according to the above-stated aspect, the movement of the other vehicle may be expressed by a relative speed vector; and the function stopping unit may be further configured not to stop the avoidance steering function when, based on the detection result of the other-vehicle detecting unit, a distance between the host vehicle and the other vehicle continues to be equal to or more than a predetermined threshold for a predetermined time period.

Further, in some exemplary embodiments, in the travel control apparatus, the movement of the other vehicle may be expressed by a relative speed vector, and the function stopping unit may be further configured not to stop the avoidance steering function when a distance between the host vehicle and the other vehicle continues to be equal to or more than a predetermined threshold for a predetermined period based on the detection result of the other-vehicle detecting unit.

In various aspects and embodiments described herein, the term "predetermined threshold" may be understood as a threshold value that is specified or determined before the threshold value is used in a process carried out by the travel control apparatus.

When the distance between the host vehicle and the other vehicle continues to be equal to or more than the predetermined threshold for the predetermined period, there may be no fear of causing the host vehicle to travel in an unpredictable manner for the driver of the other vehicle (which may also cause discomfort) even when the host vehicle executes the avoidance steering function. In such a case, the travel control apparatus can execute and does not need to stop the avoidance steering function (when the distance between the host vehicle and the other vehicle continues to be equal to or more than the predetermined threshold for the predetermined period), and hence the original avoidance steering function can be exhibited.

According to yet another aspect, a travel control method is provided. The travel control method has an avoidance steering function for controlling steering, when a host vehicle changes lanes, so as to avoid contact and/or abnormal approach of a host vehicle with respect to another vehicle traveling in a lane that is a destination of change for the host vehicle. Further, the travel control method comprises:
an other-vehicle detecting step of detecting whether the other vehicle is present and further detecting a movement of the other vehicle when the other vehicle is present; and
a function stopping step of stopping the avoidance steering function in one of the following cases:
   a position of the other vehicle after an elapse of a specified time period is in a determination region, the specified time period being acquired based on a detection result of the other-vehicle detecting step, the determination region being a region that is in a host lane on an outer side of the host vehicle in a vehicle-width-direction and that extends in an extending direction of the host lane, the host lane being a lane in which the host vehicle travels; or
   the position of the other vehicle has passed the determination region.

In some circumstances, a travel control method may be a method having an avoidance steering function for controlling steering so as to avoid at least one of contact and/or abnormal approach of a host vehicle with respect to another vehicle traveling in a lane that is a destination of change when the host vehicle changes lanes, the travel control method including: an other-vehicle detecting step of detecting whether the other vehicle is present and further detecting a movement of the other vehicle when the other vehicle is present; and a function stopping step of stopping the avoidance steering function when one of a case where a position of the other vehicle after an elapse of a predetermined period acquired based on a detection result of the other-vehicle detecting unit is in a determination region that is a region extending in an extending direction of a host lane, on a vehicle-width-direction outer side of the host vehicle, and in the host lane, and a case where the position of the other vehicle has passed the determination region occurs, the host lane being a lane in which the host vehicle travels.

The travel control method according to the above-stated aspect and various exemplary embodiments as described herein may be considered as a method for a travel control apparatus having the avoidance steering function as stated above. For example, the avoidance steering function of the travel control apparatus may be for controlling steering, when a host vehicle changes lanes, so as to avoid contact and/or abnormal approach of a host vehicle with respect to another vehicle traveling in a lane that is a destination of change for the host vehicle. In some circumstances, the avoidance steering function of the travel control apparatus may be for controlling steering so as to avoid at least one of contact and/or abnormal approach of a host vehicle with respect to another vehicle traveling in a lane that is a destination of change when the host vehicle changes lanes.

The travel control method as stated above can stop the avoidance steering function when the distal end position of the other vehicle after the elapse of the predetermined period is in the determination region or has passed the determination region, and hence the control that returns the steering from the traveling lane of the host vehicle toward the lane that is the destination of the change to the traveling lane of the host vehicle in order to avoid contact and/or abnormal approach between the host vehicle and the other vehicle at the time of the lane change can be stopped.
Therefore, with the travel control method, it may be likely that the host vehicle travels in a predictable manner for a driver of the other vehicle, thereby reducing the risk of accident between the host vehicle and the other vehicle. Thus, the travel control method can improve safety for the host vehicle and the other vehicle. In some circumstances, the travel control method can also reduce the discomfort of the passenger on the other vehicle.

In some exemplary embodiments, in the method according to the above-stated aspect, the determination region may be set ahead of the host vehicle and/or behind the host vehicle.

Further, in some exemplary embodiments, the function stopping step may further include:
stopping the avoidance steering function when, based on the detection result of the other-vehicle detecting unit, the other vehicle is present on a side of the host vehicle in a direction opposite from a direction of lane change of the host vehicle.

Further, in some exemplary embodiments, the movement of the other vehicle may be expressed by a relative speed vector; and
in the function stopping step, the avoidance steering function is not stopped when, based on the detection result of the other-vehicle detecting unit (1, 52), a distance between the host vehicle (VCs) and the other vehicle continues to be equal to or more than a predetermined threshold for a predetermined time period.

Further, according to yet another aspect, a computer program product is provided. The computer program product comprises computer-readable instructions that, when loaded and run on a computer, cause the computer to perform the method according to the above-stated aspect and various exemplary embodiments thereof.

According to various aspects and embodiments described herein, the host vehicle can be prevented from traveling in a manner that is unpredictable for the driver of the other vehicle, particularly when the host vehicle changes lanes. This may lead to reducing the risk of an accident between the host vehicle and the other vehicle. In other words, the safety for the host vehicle and the other vehicle may be improved. In some circumstances, various aspects and embodiments described herein can also reduce the discomfort of the passenger on the other vehicle.

### BRIEF DESCRIPTION OF THE DRAWINGS

FIG. 1 is a block diagram illustrating the configuration of a travel control apparatus in an embodiment;
FIG. 2 illustrates radar apparatuses and an image pickup apparatus in the travel control apparatus mounted on a vehicle;
FIGS. 3A to 3C illustrate an avoidance steering function of the travel control apparatus;
FIG. 4 illustrates conditions for stopping an avoidance steering function of the travel control apparatus;
FIG. 5 is a flowchart illustrating the operation of the travel control apparatus; and
FIG. 6 illustrates a variation of the travel control apparatus.

### DETAILED DESCRIPTION OF THE PREFERRED EMBODIMENT

One or a plurality of embodiments of the present disclosure are described below with reference to the drawings. However, the scope of the invention is defined by the claims and is not limited to the disclosed embodiment. Note that the configurations denoted by the same reference characters throughout the drawings indicate the same configurations, and the description thereof is omitted, as appropriate. In the present description, configurations that are collectively referred to are denoted by reference characters of which suffixes are omitted and the individual configurations are denoted by reference characters with suffixes.

A travel control apparatus in an exemplary embodiment may be an apparatus having an avoidance steering function for controlling the steering so as to avoid at least one of the contact and/or abnormal approach of a host vehicle with respect to another vehicle traveling in a lane that is the destination of the change when the host vehicle changes lanes. The abnormal approach may be an approach that may cause contact. Further, the distance range between the host vehicle and the other vehicle that is conceived to be the abnormal approach may be preset in accordance with specifications, for example. Particularly in this exemplary embodiment, the travel control apparatus includes: an other-vehicle detecting unit configured to detect whether the other vehicle is present and further detect a movement of the other vehicle when the other vehicle is present; and a function stopping unit configured to stop the avoidance steering function when one of a case where a position of the other vehicle after an elapse of a predetermined period acquired based on a detection result of the other-vehicle detecting unit is in a determination region that is a region extending in an extending direction of a host lane, on a vehicle-width-direction outer side of the host vehicle, and in the host lane, and a case where the position of the other vehicle has passed the determination region occurs, the host lane being a lane in which the host vehicle travels.

In some circumstances, the travel control apparatus of the exemplary embodiment may have an avoidance steering function for controlling steering, when a host vehicle changes lanes, so as to avoid contact and/or abnormal approach of the host vehicle with respect to another vehicle traveling in a lane that is a destination of change for the host vehicle. The travel control apparatus may further comprise:
an other-vehicle detecting unit configured to detect whether the other vehicle is present and further detect a movement of the other vehicle when the other vehicle is present; and
a function stopping unit configured to stop the avoidance steering function in one of the following cases:
   a position of the other vehicle after an elapse of a specified time period is in a determination region, the specified time period being acquired based on a detection result of the other-vehicle detecting unit, the determination region being a region that is in a host lane on an outer side of the host vehicle in a vehicle-width-direction and that extends in an extending direction of the host lane, the host lane being a lane in which the host vehicle travels; or
   the position of the other vehicle has passed the determination region.
The travel control apparatus as stated above is described in more detail below.

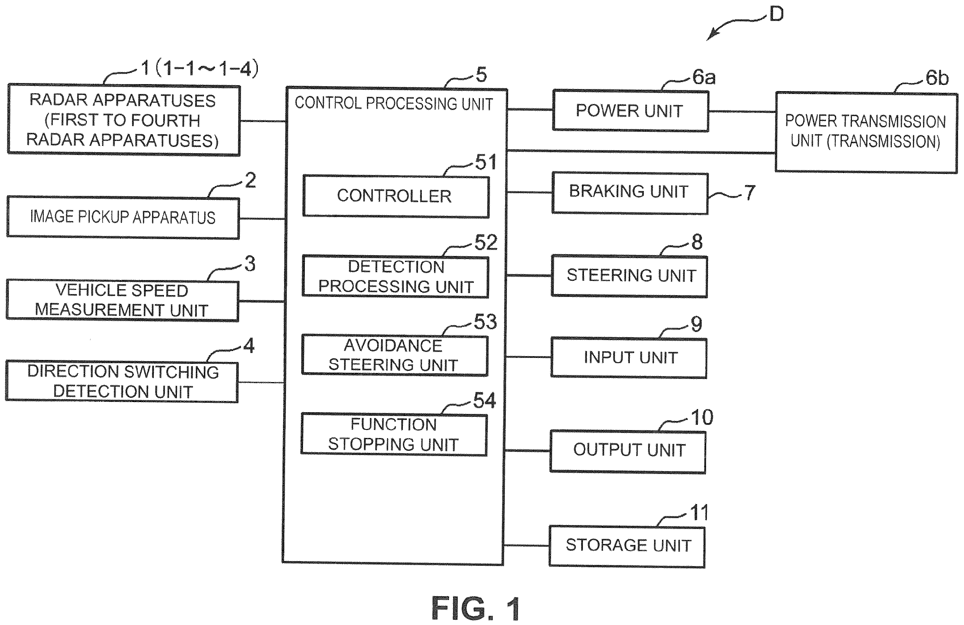

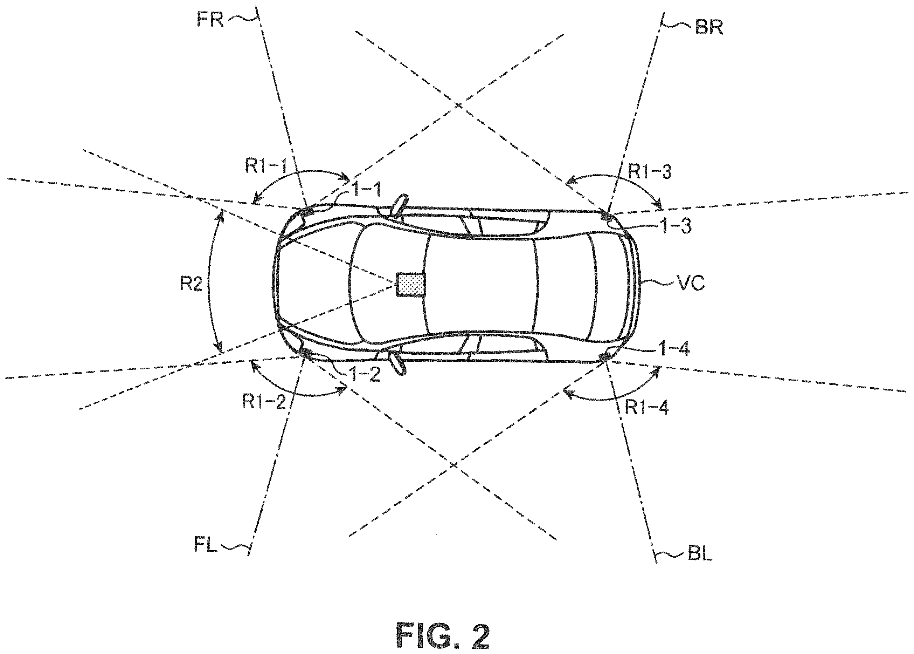

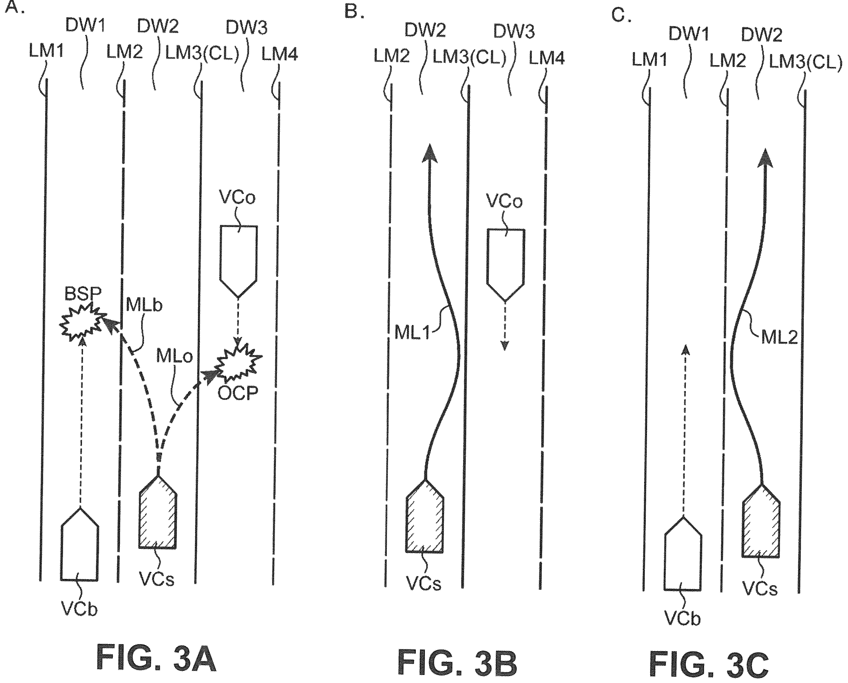

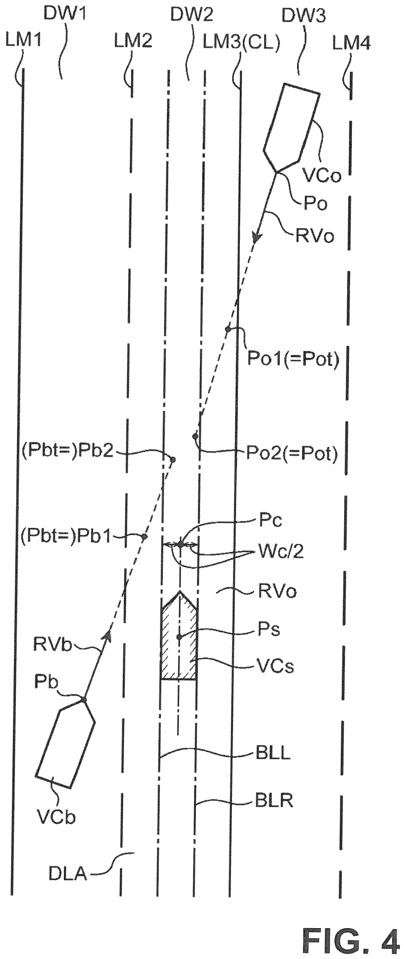

FIG. 1 is a block diagram illustrating an exemplary configuration of the travel control apparatus in the exemplary embodiment. FIG. 2 illustrates exemplary radar apparatuses and an exemplary image pickup apparatus in the travel control apparatus mounted on a vehicle. FIGS. 3A to 3C illustrate an exemplary avoidance steering function of the travel control apparatus. FIG. 3A illustrates a traveling situation before the lane change as one example. FIG. 3B illustrates a traveling path of the host vehicle obtained by the avoidance steering function when the host vehicle changes lanes to the opposite lane as one example. Further, FIG. 3C illustrates a traveling path of the host vehicle obtained by the avoidance steering function when the host vehicle changes lanes to an adjacent lane in the same direction as one example. FIG. 4 illustrates exemplary conditions for stopping the avoidance steering function of the travel control apparatus.

As illustrated in FIG. 1, a travel control apparatus D in the exemplary embodiment may include, for example, radar apparatuses 1 (1-1 to 1-4), an image pickup apparatus 2, a direction switching detection unit 4, a control processing unit 5, and a storage unit 11. Particularly in this exemplary embodiment, the travel control apparatus D may further include a vehicle speed measurement unit 3 in order to control the travel, a power unit 6a, a power transmission unit 6b, a braking unit 7, and a steering unit 8 in order to perform the travel, and an input unit 9 and an output unit 10 in order to perform predetermined input and output.

The radar apparatuses 1 may be apparatuses connected to the control processing unit 5. The radar apparatuses 1 may transmit a predetermined transmission wave around the vehicle in accordance with the control of the control processing unit 5, may detect an object by receiving a reflected wave of the transmission wave reflected by the object, and may measure the position of the object (e.g., the relative position (for instance, the relative direction and the relative distance) of the object with respect to the host vehicle) by measuring the direction of the object and the distance to the object. In this exemplary embodiment, the radar apparatuses 1 may also acquire the relative speed of the object with respect to the host vehicle based on the Doppler shift of the reflected wave with respect to the transmission wave. Note that, for convenience of explanation, when vehicles VC need to be distinguished from each other, the vehicles VC are referred to as a "host vehicle VCs", an "other vehicle VCp", an "other front vehicle VCo", an "other rear vehicle VCb", an "other side vehicle VCh", and the like, as appropriate. In this exemplary embodiment, as illustrated in FIG. 2, the radar apparatuses 1 may include four radar apparatuses, namely first to fourth radar apparatuses 1-1 to 1-4 disposed on four corners of the vehicle VC, for example. More specifically, the first radar apparatus 1-1 may be provided on a front end (for example, a right front corner) on one side of the vehicle VC, and may measure the object by a predetermined (or predeterminable) 1-1 target range R1-1 around a first direction FR diagonally forward of the vehicle width direction on the one side. The second radar apparatus 1-2 may be provided on a front end (for example, a left front corner) on the other side in the vehicle VC, and may measure the object by a predetermined (or predeterminable) 1-2 target range R1-2 around a second direction FL diagonally forward of the vehicle width direction on the other side. A third radar apparatus 1-3 may be provided on a rear end (for example, a right rear corner) on the one side of the vehicle VC, and may measure the object by a predetermined (or predeterminable) 1-3 target range R1-3 around a third direction BR diagonally rearward of the vehicle width direction on the one side. The fourth radar apparatus 1-4 may be provided on a rear end (for example, a left rear corner) on the other side in the vehicle VC, and may measure the object by a predetermined (or predeterminable) 1-4 target range Rl-4 around a fourth direction BL diagonally rearward of the vehicle width direction on the other side. The first to fourth radar apparatuses 1-1 to 1-4 may each include, for example, a transmission unit configured to transmit a millimeter-wave band transmission wave while performing scanning in the 1-1 to 1-4 target ranges R1-1 to Rl-4, a reception unit configured to receive a reflected wave acquired when the transmission wave is reflected by the object, and a signal processing unit configured to acquire the position of the object by acquiring the direction of the object and the distance to the object based on the transmission wave and the reflected wave. The signal processing unit may acquire the direction of the object from the transmission direction of the transmission wave in the scanning in the first target ranges R1 (R1-1 to R1-4). Further, the signal processing unit may acquire the distance to the object based on the time difference between the transmission timing of the transmission wave and the reception timing of the reflected wave (e.g., TOF (Time-Of-Flight) method). Note that the radar apparatuses 1 (1-1 to 1-4) are not limited to the configuration as stated above, and may be various appropriate radars. For example, the radar apparatuses 1 may be laser radars using laser light instead of the millimeter-wave band. Alternatively, for example, the radar apparatuses 1 may be apparatuses that include a plurality of reception antennas and acquire the direction of the object from the phase difference between the reflected waves received by the plurality of reception antennas. Each of the first to fourth radar apparatuses 1-1 to 1-4 may output, to the control processing unit 5, the relative position (e.g., the relative direction and the relative distance) and the relative speed of the object measured as stated above.

The image pickup apparatus 2 may be an apparatus that is connected to the control processing unit 5 and generates an image (e.g., image data) in accordance with the control of the control processing unit 5. The image pickup apparatus 2 may be mounted in the vehicle VC so as to pick up an image of a place ahead (e.g., in a traveling direction) of the vehicle VC. For example, particularly in this exemplary embodiment, as illustrated in FIG. 2, the image pickup apparatus 2 is disposed on a top surface (e.g., roof inner side surface) near a windshield in the vehicle VC so as to pick up an image of a place ahead (e.g., in the traveling direction) of the vehicle VC with a predetermined (or predeterminable) second target range (e.g., angle of view) R2. In one example, the image pickup apparatus 2 may be a digital camera including an imaging optical system that forms an optical image of a subject (e.g., object) on a predetermined imaging plane, an area image sensor that is disposed so that a light receiving plane matches with the imaging plane and converts the optical image of the subject to an electrical signal, an image processing unit configured to generate image data that is data indicating the image of the subject by performing image processing of the output of the area image sensor, and the like. The image pickup apparatus 2 may output the generated image to the control processing unit 5.

The vehicle speed measurement unit 3 may be an apparatus that is connected to the control processing unit 5 and may measure the speed of the vehicle in accordance with the control of the control processing unit 5. The vehicle speed measurement unit 3 may be a wheel speed sensor and the like that includes a rotary encoder and peripheral circuits thereof, for example, and may measure the wheel speed (e.g., the rotational speed of the wheel) from the displacement amount of the rotation of the wheel (e.g., axle) per unit time. The vehicle speed measurement unit 3 may output the measured wheel speed to the control processing unit 5. Particularly in this embodiment, the control processing unit 5 converts the wheel speed to the vehicle speed based on the size of the wheel, but the conversion from the wheel speed to the vehicle speed may be carried out by the vehicle speed measurement unit 3 including the wheel speed sensor. Alternatively, the control processing unit 5 may handle the wheel speed as the vehicle speed.

The direction switching detection unit 4 may be an apparatus that is connected to the control processing unit 5 and may detect the switching of the lanes in accordance with the control of the control processing unit 5. The direction switching detection unit 4 may include a direction instruction switch and peripheral circuits thereof, for example, and may detect the direction of the lane change, the start of the lane change, and the end of the lane change in accordance with the turning on and off of the direction instruction switch. Alternatively, for example, the direction switching detection unit 4 may include a steering angle sensor mounted on the steering unit 8 and peripheral circuits thereof, and may detect the direction of the lane change in accordance with the steering angle detected by the steering angle sensor. The direction switching detection unit 4 may detect the start of the lane change when the steering angle detected by the steering angle sensor is a steering angle equal to or more than a preset threshold (e.g., steering angle determination threshold) and continues for a preset threshold (e.g., a first steering period determination threshold) of time or more. Further, the direction switching detection unit 4 may detect the end of the lane change when the steering angle detected by the steering angle sensor is returned after continuing for a preset threshold (e.g., second steering period determination threshold) of time or more. Alternatively, the direction switching detection unit 4 may include the direction instruction switches, the steering angle sensor, and the peripheral circuits thereof, and detect the direction of the lane change, the start of the lane change, and the end of the lane change by combining the above.

The power unit 6a may be an apparatus that is connected to the control processing unit 5 and may generate the power for driving (e.g., moving) the vehicle in accordance with the control of the control processing unit 5. The power unit 6a may include a prime mover such as an engine, a motor, and a hybrid apparatus thereof, and auxiliary devices thereof, for example. The power transmission unit 6b may be a mechanism that transmits the power generated by the power unit 6a to driving wheels. Further, the power transmission unit 6b may include a transmission that is connected to the control processing unit 5 and performs the switching of the moving direction of the vehicle and the switching of the transmission gear ratio and the reduction gear radio in accordance with the control of the control processing unit 5. The power generated by the power unit 6a as stated above may be transmitted to the driving wheels via the power transmission unit 6b, and rotate the driving wheels.

The braking unit 7 may be an apparatus that is connected to the control processing unit 5 and that provides the braking force to the vehicle and reduces the speed of the vehicle in accordance with the control of the control processing unit 5. The braking unit 7 can also stop the vehicle as a result of reducing the speed of the vehicle, and maintain the vehicle to be stopped as a result of continuing the provision of the braking force while the vehicle is being stopped. The braking unit 7 may include a brake apparatus such as a disk brake and a regenerative brake and auxiliary devices thereof, for example. Note that the braking unit 7 may have a function of a so-called parking brake apparatus.

The steering unit 8 may be an apparatus that is connected to the control processing unit 5 and steers the vehicle in accordance with the control of the control processing unit 5. The steering unit 8 may include a steering apparatus that changes the direction of the steering wheel of the vehicle and auxiliary devices thereof.

By controlling the power unit 6a and the braking unit 7, the acceleration of the vehicle may be adjusted, and the wheel speed and the speed of the vehicle (in other words, vehicle speed) may be adjusted. By controlling the transmission of the power transmission unit 6b, the gear ratio and the moving direction of the vehicle (e.g., advance and retreat) may be adjusted. By controlling the steering unit 8, the travel direction of the vehicle may be adjusted.

The input unit 9 may be a device that is connected to the control processing unit 5 and inputs various commands such as a command for instructing the start of a driving assistance and the release thereof and a command for instructing the start of automatic driving and the release thereof, as well as various data such as data necessary for executing the driving assistance and the automatic driving to the travel control apparatus D. Further, the input unit 9 may be a plurality of switches to which functions are assigned in advance, for example. The output unit 10 may be a device that is connected to the control processing unit 5 and outputs the commands, the data, and the like input from the input unit 9 in accordance with the control of the control processing unit 5. The output unit 10 may be a display apparatus such as a liquid-crystal display (LCD) and an organic EL display or a speaker that outputs voice, for example.

The storage unit 11 may be a circuit that is connected to the control processing unit 5 and stores therein various predetermined programs and various predetermined data in accordance with the control of the control processing unit 5. The various predetermined programs may include: control processing programs such as a control program for controlling the units 1 to 4 and 6 (6a and 6b) to 11 of the travel control apparatus D in accordance with the functions of the units; a detection processing program for detecting whether the other vehicle VCp is present around the host vehicle VCs based on the output signals of the radar apparatuses 1 (1-1 to 1-4) and further detecting the movement (particularly in this exemplary embodiment, the relative position (e.g., the relative direction and the relative distance), the relative speed, and the relative moving direction with respect to the host vehicle VCs) of the other vehicle VCp when the other vehicle VCp is present; an avoidance steering program for controlling the steering so as to avoid at least one of the contact and/or abnormal approach of the host vehicle with respect to the other vehicle traveling in the lane that is the destination of the change based on the detection result of the detection processing program when the host vehicle changes lanes; and a function stopping program for stopping the execution of the avoidance steering program when one of a case where the position of the other vehicle VCp after an elapse of a predetermined period acquired based on the detection result of the detection processing program is in predetermined determination regions described below and a case where the position of the other vehicle has passed the determination regions occurs. The various predetermined data may include data necessary for executing the programs such as predetermined thresholds described below and the like. The storage unit 11 may include a ROM (Read Only Memory) that is a nonvolatile storage device and/or an EEPROM (Electrically Erasable Programmable Read Only Memory) that is a rewritable nonvolatile storage device, for example. The storage unit 11 may include a RAM (Random Access Memory) serving as a so-called working memory of the control processing unit 5 that stores therein data and the like generated when the predetermined program is executed, for example.

The control processing unit 5 may be a circuit for controlling the units 1 to 4 and 6 (6a and 6b) to 11 of the travel control apparatus D in accordance with the functions of the units, and for controlling the steering so as to avoid at least one of the contact and/or abnormal approach of the host vehicle with respect to the other vehicle traveling in the lane that is the destination of the change when the host vehicle changes lanes. The control processing unit 5 may include a CPU (Central Processing Unit) and peripheral circuits thereof, for example. The control processing unit 5 may functionally include a controller 51, a detection processing unit 52, an avoidance steering unit 53, and a function stopping unit 54 by executing the control processing programs.

The controller 51 may control the units 1 to 4 and 6 (6a and 6b) to 11 of the travel control apparatus D in accordance with the functions of the units, and may manage the entire control of the travel control apparatus D.

The detection processing unit 52 may detect whether the other vehicle is present around the host vehicle based on the output signals of the radar apparatuses 1 (1-1 to 1-4), and may further detect the movement of the other vehicle when the other vehicle is present. The detection processing unit 52 may notify the avoidance steering unit 53 and the function stopping unit 54 of the detection result.

More specifically, the detection processing unit 52 may detect whether the other front vehicle VCo is present in a place ahead of the host vehicle VCs on one side thereof (e.g., the right front side in the abovementioned example) based on the output signal of the first radar apparatus 1-1, and may further detect the movement of the other front vehicle VCo when the other front vehicle VCo is present in a place ahead of the host vehicle VCs on one side thereof. In more detail, when the first radar apparatus 1-1 detects an object by the output signal of the first radar apparatus 1-1, the detection processing unit 52 may determine that the other front vehicle VCo is detected. Then, the detection processing unit 52 may acquire the relative position (e.g., the relative direction and the relative distance) and the relative speed of the other front vehicle VCo with respect to the host vehicle VCs in a place ahead of the host vehicle VCs on one side thereof from the output signal of the first radar apparatus 1-1, and may store the relative position and the relative speed in the storage unit 11 as the movement of the other front vehicle VCo. The detection processing unit 52 may further acquire the relative moving direction and may store the relative moving direction in the storage unit 11 as the movement of the other front vehicle VCo. The relative moving direction of the other front vehicle VCo can be acquired by measuring the relative position of the other front vehicle VCo twice at different timings by the first radar apparatus 1-1.

Note that, in order to detect whether the other front vehicle VCo is present in a more appropriate manner, an image pickup apparatus that acquires an image in the same direction as the first radar apparatus 1-1 may be further provided in the vehicle VC, and the image generated by the image pickup apparatus may be used. In this case, the detection processing unit 52 may determine whether a vehicle appears in an image region having a predetermined size corresponding to the position of the object detected by the first radar apparatus 1-1 in the image generated by the image pickup apparatus. For example, the detection processing unit 52 may determine whether the vehicle appears in the image region by determining whether a predetermined feature amount relating to the vehicle is extracted from the image region. In more detail, for example, edges may be extracted from the image region by an edge filter, and straight lines may be extracted from the extracted edges by linear Hough transformation. Then, it may be determined whether a rectangle formed by the extracted straight lines is extracted as the feature amount indicating an outline shape of the vehicle. For example, a template indicating the vehicle may be prepared in advance, and the detection processing unit 52 may determine whether the vehicle appears in the image region in accordance with whether the vehicle is extracted by executing template matching on the image region. For example, a machine learning model (for example, convolutional neural network model (CNN model)) that has performed machine learning (for example, deep learning) so as to extract the vehicle may be prepared in advance. Further, the detection processing unit 52 may determine whether the vehicle appears in the image region in accordance with whether the vehicle is extracted from the image region by the machine learning model. When the vehicle appears in the image region as a result of the determination, the detection processing unit 52 may determine that the detected object is the other front vehicle VCo.

Similarly, the detection processing unit 52 may detect whether the other front vehicle VCo is present in a place ahead of the host vehicle VCs on the other side thereof (e.g., the left front side in the abovementioned example) based on the output signal of the second radar apparatus 1-2, and may further detect the movement of the other front vehicle VCo when the other front vehicle VCo is present in a place ahead of the host vehicle VCs on the other side thereof. The detection processing unit 52 may detect whether the other rear vehicle VCb is present in a place behind the host vehicle VCs on one side thereof (e.g., the right rear side in the abovementioned example) based on the output signal of the third radar apparatus 1-3, and may further detect the movement of the other rear vehicle VCb when the other rear vehicle VCb is present in a place behind the host vehicle VCs on one side thereof. The detection processing unit 52 may detect whether the other rear vehicle VCb is present in a place behind the host vehicle VCs on the other side thereof (e.g., the left rear side in the abovementioned example) based on the output signal of the fourth radar apparatus 1-4, and may further detect the movement of the other rear vehicle VCb when the other rear vehicle VCb is present in a place behind the host vehicle VCs on the other side thereof.

When the host vehicle changes lanes, the avoidance steering unit 53 may execute the avoidance steering function for controlling the steering so as to avoid contact and/or abnormal approach of the host vehicle with respect to the other vehicle traveling in the lane that is the destination of the change, based on the detection result of the detection processing unit 52.

Particularly in this exemplary embodiment, the avoidance steering function includes an other-front-vehicle avoidance steering function (which may be referred to as "ON Coming Prevention (OCP)") and an other-rear-vehicle avoidance steering function (which may be referred to as "Blind Spot Prevention (BSP)"), for example. For example, as illustrated in FIG. 3A, on a road (e.g., traveling path) with two lanes on each way (note that the first lane on the right end of the plane of the paper is not shown) having first to third lanes DW1 to DW3 partitioned by first to fourth lane markers LM1 to LM4, the host vehicle VCs traveling in the second lane DW2 may come into contact with or abnormally approach the other front vehicle VCo traveling in the third lane DW3 that is the opposite lane serving as the destination of the change as indicated by a future traveling path MLo with the broken line when the lane is changed to the third lane DW3 in order to overtake a preceding vehicle or avoid an obstacle ahead of the host vehicle VCs, for example. In a case as above, the OCP may be executed. As illustrated in FIG. 3B, the steering unit 8 may be controlled by the avoidance steering unit 53 so as to return the steering toward the third lane DW3 that is the destination of the change to the second lane DW2 in which the host vehicle VCs has been travelling, and the host vehicle VCs may travel as indicated by a traveling path ML1. More specifically, in the execution of the OCP as stated above, the avoidance steering unit 53 may first determine whether the other front vehicle VCo is present in the lane that is the destination of the change (e.g., the third lane DW3 in this example) based on the detection result of the detection processing unit 52, and may acquire an index (e.g., risk determination index) for determining whether the host vehicle VCs may cause contact or an abnormal approach when it is determined that the other front vehicle VCo is present. Then, the avoidance steering unit 53 may determine whether the acquired risk determination index satisfies a predetermined first risk determination condition (e.g., front-side risk determination condition) set in advance. When the front-side risk determination condition is satisfied, the avoidance steering unit 53 may set a traveling path (e.g., the traveling path ML1 in this specific example) that returns to the lane before the change (the second lane DW2 in this specific example) from the lane that is the destination of the change (the third lane DW3 in the specific example illustrated in FIG. 3B) based on the current vehicle speed (e.g., wheel speed) so that abrupt steering is basically not caused. The avoidance steering unit 53 may control the steering unit 8 so as to follow the traveling path. The risk determination index may be a value (e.g., Time To Collision) obtained by dividing the relative distance of the other front vehicle VCo with respect to the host vehicle VCs by the relative speed thereof (e.g., TTC = relative distance / relative speed), for example. The front-side risk determination condition may be a condition in which the risk determination index exceeds a first risk determination threshold Thttc1 and falls below a second risk determination threshold Thtcc2 (Thttcl < TCC < Thttc2), for example. The first and second risk determination thresholds Thttc1 and Thttc2 may be set to appropriate values from a plurality of samples in advance.

Meanwhile, as illustrated in FIG. 3A, the host vehicle VCs traveling in the second lane DW2 may come into contact with or abnormally approach the other rear vehicle VCb travelling in the first lane DW1 that is the lane in the same direction serving as the destination of the change as indicated by a future traveling path MLb with the broken line when the lane is changed to the first lane DW1 in order to overtake a preceding vehicle or avoid an obstacle ahead of the host vehicle VCs, for example. In a case as stated above, the BSP may be executed. As illustrated in FIG. 3C, the steering unit 8 may be controlled by the avoidance steering unit 53 so as to return the steering toward the first lane DW1 that is the destination of the change to the second lane DW2 in which the host vehicle VCs has been travelling, and the host vehicle VCs may travel as indicated by a traveling path ML2. More specifically, in the execution of the BSP as stated above, the avoidance steering unit 53 may first determine whether the other rear vehicle VCb is present in the lane that is the destination of the change (e.g., the first lane DW1 in this example) based on the detection result of the detection processing unit 52. When it is determined that the other rear vehicle VCb is present, the avoidance steering unit 53 may acquire the risk determination index. Then, the avoidance steering unit 53 may determine whether the acquired risk determination index satisfies a predetermined second risk determination condition (e.g., rear-side risk determination condition) set in advance. When the rear-side risk determination condition is satisfied, the avoidance steering unit 53 may set a traveling path (e.g., the traveling path ML2 in this specific example) that returns to the lane before the change (e.g., the second lane DW2 in this specific example) from the lane that is the destination of the change (e.g., the first lane DW1 in the specific example illustrated in FIG. 3C) based on the current vehicle speed (e.g., wheel speed) so that abrupt steering is basically not caused. The avoidance steering unit 53 may control the steering unit 8 so as to follow the traveling path. The rear-side risk determination condition may be a condition in which the risk determination index exceeds a third risk determination threshold Thttc3 and falls below a fourth risk determination threshold Thttc4 (Thttc3 < TCC <Thttc4), for example. The third and fourth risk determination thresholds Thttc3 and Thttc4 may be set to appropriate values from a plurality of samples in advance.

Note that, in the OCP and the BSP described above, the traveling paths ML1 and ML2 may be set and the steering unit 8 may be controlled so as to follow the traveling paths ML1 and ML2, but a yaw rate toward the lane before the change from the lane that is the destination of the change may be set based on the current vehicle speed (e.g., wheel speed), and the steering unit 8 may be controlled for a period based on the current vehicle speed (e.g., wheel speed) in accordance with the set yaw rate so that abrupt steering is basically not caused. In a case as stated above, the host vehicle VCs may be manually steered by a driver so as to travel in the lane before the change after the period based on the current vehicle speed (e.g., wheel speed) has elapsed.

Particularly in this exemplary embodiment, the travel control apparatus D includes the four first to fourth radar apparatuses 1-1 to 1-4. However, as can be seen from the description above with reference to FIGS. 3A to 3C, the second radar apparatus 1-2 provided on the front end on the left side is not necessarily needed and may be omitted when the vehicle VC is a dedicated car specialized in the vehicle left-side driving. Similarly, when the vehicle VC is a dedicated car specialized in the vehicle right-side driving, the first radar apparatus 1-1 provided on the front end on the right side may be omitted. In this embodiment, the vehicle VC may include the first and second radar apparatuses 1-1 and 1-2 so as to be usable in both of the vehicle left-side driving and the vehicle right-side driving.

The function stopping unit 54 may stop the avoidance steering function performed by the avoidance steering unit 53 when one of a case where the position of the other vehicle VCp after a predetermined period acquired based on the detection result of the detection processing unit 52 has elapsed is within the predetermined determination regions and a case where the position of the other vehicle VCp has passed the determination regions occurs. The predetermined period may be a specified time period set to an appropriate value (for example, two seconds or three seconds) from a plurality of samples in advance. Note that the predetermined period (e.g., the specified time period) may be individually set for the OCP and the BSP. The position of the other vehicle VCp may be defined, as appropriate, in advance, and may be a distal end position of the other vehicle VCp detected by the radar apparatuses 1, for example, or may be a center position of the other vehicle VCp estimated from the distal end position of the other vehicle VCp detected by the radar apparatuses 1, for example (in this case, a correction value (e.g., offset value) necessary for estimating the center position from the distal end position is stored in the storage unit 11 in advance as one of the various predetermined data). Particularly in this exemplary embodiment, as illustrated in FIG. 4, the predetermined determination regions extend in the extending direction of a host lane (e.g., the second lane DW2 between a second lane marker LM2 and a third lane marker LM3 in the example illustrated in FIG. 4) that is the lane in which the host vehicle VCs travels, for example, and are regions DRA and DLA on the vehicle-width-direction outer sides of the host vehicle VCs and in the host lane. In general, the determination regions may include the region DRA set on one side (e.g., right side) of the host vehicle VCs and the region DLA set on the other side (e.g., left side) of the host vehicle VCs.

More specifically, as described above, there may be two avoidance steering functions, that is, the OCP and the BSP. Therefore, first, in the OCP, the function stopping unit 54 may determine whether the other front vehicle VCo is present in the lane (e.g., the third lane DW3 in this example) adjacent on the right side that is assumed to be the opposite lane with respect to the host lane (e.g., the second lane DW2 in the example illustrated in FIG. 4) based on the detection result of the detection processing unit 52. When it is determined that the other front vehicle VCo is present, the function stopping unit 54 may acquire the position of the other front vehicle VCo after the elapse of a predetermined period (e.g., a specified time period) based on the detection result of the detection processing unit 52. As described above, the detection result of the detection processing unit 52 may be the relative position, the relative speed, and the relative moving direction of the other vehicle VCp with respect to the host vehicle VCs. Therefore, as illustrated in FIG. 4, the function stopping unit 54 may set the determination regions DRA and DLA in a coordinate system of which coordinate origin is a position Ps of the host vehicle VCs. Further, the function stopping unit 54 may acquire a position Pot separated from a relative position Po of the other front vehicle VCo in the relative moving direction RVo by an estimated movement distance acquired by multiplying the relative speed by the predetermined period as the position Pot of the other front vehicle VCo after the elapse of a predetermined period. Then, the function stopping unit 54 may determine whether the acquired position Pot of the other front vehicle VCo is in the determination region DRA on the right side. Further, the function stopping unit 54 may determine whether the acquired position Pot of the other front vehicle VCo has passed the determination region DRA on the right side (in other words, whether a line segment connecting the relative position Po and the position Pot of the other front vehicle VCo to each other intersects with the determination region DRA on the right side). As a result of the determination, for example, when the acquired position Pot of the other front vehicle VCo is a position Po1 that is a position in the determination region DRA on the right side illustrated in FIG. 4, it may be determined that the acquired position Pot of the other front vehicle VCo is in the determination region DRA on the right side and the function stopping unit 54 may cause the avoidance steering unit 53 to stop the OCP.
For example, when the acquired position Pot of the other front vehicle VCo is a position Po2 exceeding the determination region DRA on the right side illustrated in FIG. 4 as a result of the determination, it may be determined that the acquired position Pot of the other front vehicle VCo has passed the determination region DRA on the right side and the function stopping unit 54 may cause the avoidance steering unit 53 to stop the OCP. Meanwhile, when the acquired position Pot of the other front vehicle VCo is not in the determination region DRA on the right side and has not passed the determination region DRA on the right side, in other words, the acquired position Pot of the other front vehicle VCo has not reached the determination region DRA on the right side, the function stopping unit 54 may end the processing. Therefore, the avoidance steering unit 53 may execute the OCP, as necessary.

Meanwhile, in the BSP, the function stopping unit 54 may determine whether the other rear vehicle VCb is present in the lane (e.g., the first lane DW1 in this example) adjacent on the left side that is the lane in the same direction as the host lane (e.g., the second lane DW2 in the example illustrated in FIG. 4) based on the detection result of the detection processing unit 52. When it is determined that the other rear vehicle VCb is present, the function stopping unit 54 may acquire the position of the other rear vehicle VCb after the elapse of a predetermined period based on the detection result of the detection processing unit 52. As with the OCP, the function stopping unit 54 may set the determination regions DRA and DLA in the coordinate system of which coordinate origin is the position Ps of the host vehicle VCs as illustrated in FIG. 4, and may acquire a position Pbt separated from a relative position Pb of the other rear vehicle VCb in a relative moving direction RVb by an estimated movement distance acquired by multiplying the relative speed by the predetermined period as the position Pbt of the other rear vehicle VCb after the elapse of a predetermined period (e.g., a specified time period). Then, the function stopping unit 54 may determines whether the acquired position Pbt of the other rear vehicle VCb is in the determination region DLA on the left side, and may determine whether the acquired position Pbt of the other rear vehicle VCb has passed the determination region DLA on the left side (in other words, whether a line segment connecting the relative position Pb and the position Pbt of the other rear vehicle VCb to each other intersects with the determination region DLA on the left side). For example, when the acquired position Pbt of the other rear vehicle VCb is a position Pb1 located in the determination region DLA on the left side illustrated in FIG. 4 as a result of the determination, it may be determined that the acquired position Pbt of the other rear vehicle VCb is in the determination region DLA on the left side and the function stopping unit 54 may cause the avoidance steering unit 53 to stop the BSP. For example, when the acquired position Pbt of the other rear vehicle VCb is a position Pb2 exceeding the determination region DLA on the left side illustrated in FIG. 4 as a result of the determination, it may be determined that the acquired position Pbt of the other rear vehicle VCb has passed the determination region DLA on the left side, and the function stopping unit 54 may cause the avoidance steering unit 53 to stop the BSP. Meanwhile, when the acquired position Pbt of the other rear vehicle VCb is not in the determination region DLA on the left side and has not passed the determination region DLA on the left side, in other words, the acquired position Pbt of the other rear vehicle VCb has not reached the determination region DLA on the left side, the function stopping unit 54 may end the processing. Therefore, the avoidance steering unit 53 may execute the BSP, as necessary.

In the description above, the stopping of the BSP for the other rear vehicle VCb on the other side (e.g., the left side in the example illustrated in FIG. 4) with respect to the host vehicle VCs has been described. However, the stopping of the BSP for the other rear vehicle VCb on one side (e.g., the right side in the example illustrated in FIG. 4) with respect to the host vehicle VCs may be similarly executed when the host vehicle VCs travels in the first lane DW1 and the other rear vehicle VCb travels the second lane DW2 or when there are three or more lanes on each way, for example.

Note that, although the avoidance steering unit 53 and the function stopping unit 54 have been described for the vehicle left-side driving in the description above, the avoidance steering unit 53 and the function stopping unit 54 can be similarly described also for the vehicle right-side driving by using the detection results of the detection processing unit 52 for the second and fourth radar apparatuses 1-2 and 1-4 instead of the detection results of the detection processing unit 52 for the first and third radar apparatuses 1-1 and 1-3.

Particularly in this exemplary embodiment, the radar apparatuses 1 and the detection processing unit 52 are equivalent to one example of the other-vehicle detecting unit configured to detect whether another vehicle is present and further detect the movement of the other vehicle when the other vehicle is present.

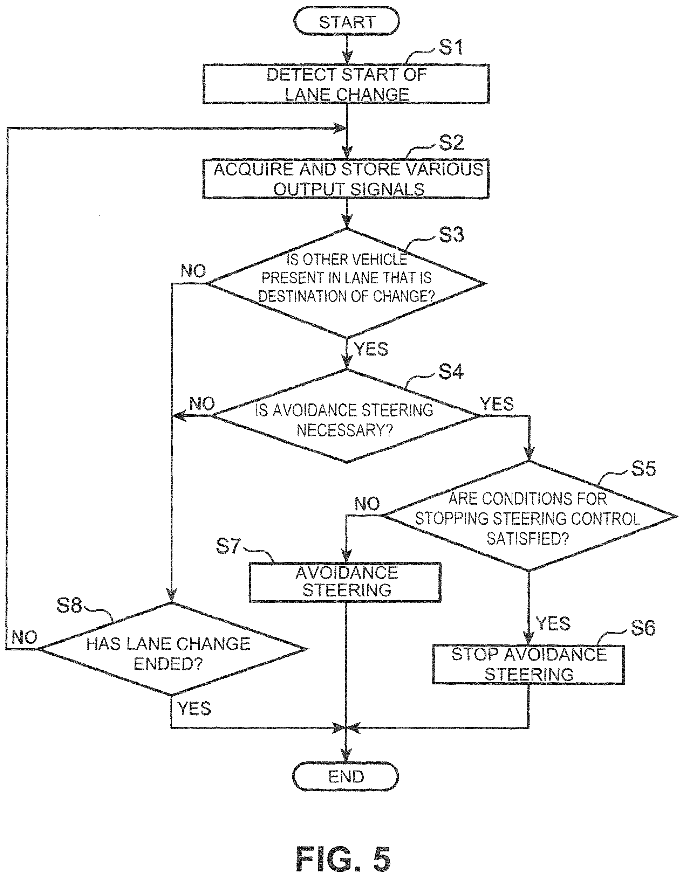

Next, the operation of this exemplary embodiment is described. FIG. 5 is a flowchart illustrating an exemplary operation of the travel control apparatus.

When the vehicle VC starts to operate, the travel control apparatus D as stated above may execute the initialization of the necessary units and start the operation thereof. By the execution of the control processing programs, the controller 51, the detection processing unit 52, the avoidance steering unit 53, and the function stopping unit 54 may be functionally configured in the control processing unit 5.

In FIG. 5, when the control processing unit 5 detects the start of the lane change by the direction switching detection unit 4 (S1), the control processing unit 5 may acquire various output signals, and may store the acquired output signals in the storage unit 11 (S2). Particularly in this exemplary embodiment, the output signals are acquired from the first to fourth radar apparatuses 1-1 to 1-4, the images are acquired from the image pickup apparatus 2, the vehicle speed (e.g., wheel speed) is acquired from the vehicle speed measurement unit 3, and the output signals, the images, and the vehicle speed are stored in the storage unit 11. Note that a case of the vehicle left-side driving is described here, but a case of the vehicle left-side driving can be similarly described.

Next, the control processing unit 5 may determine whether the other vehicle VCp is present in the lane that is the destination of the change (S3). More specifically, the control processing unit 5 may determine whether the other front vehicle VCo is present and whether the other rear vehicle VCb is present from the output signals of the radar apparatuses 1 disposed on the side corresponding to the lane that is the destination of the change out of the output signals of the first to fourth radar apparatuses 1-1 to 1-4 by the detection processing unit 52. For example, when the lane is changed to the right side, the detection processing unit 52 may determine whether the other front vehicle VCo is present based on the output signal of the first radar apparatus 1-1 provided on the front end on the right side, and the detection processing unit 52 may determine whether the other rear vehicle VCb is present based on the output signal of the third radar apparatus 1-3 provided on the rear end on the right side. Alternatively, for example, when the lane is changed to the left side, the detection processing unit 52 may determine whether the other rear vehicle VCb is present based on the output signal of the fourth radar apparatus 1-4 provided on the rear end of the left side. Note that, when map information is further stored in the storage unit 11, a position measuring unit (for example, a GPS) that measures the position of the host vehicle VCs may be further included, and it can be understood that the lane that is the destination of the change is the opposite lane from the map information and the position of the host vehicle VCs, the determination of whether the other rear vehicle VCb is present can be omitted. Meanwhile, when it can be understood that the lane that is the destination of the change is the lane in the same direction, the determination of whether the other front vehicle VCo is present can be omitted.

When the other vehicle VCp (e.g., the other front vehicle VCo or the other rear vehicle VCb) is present (Yes) as a result of the determination, the control processing unit 5 may execute processing S4 next. Meanwhile, when the other vehicles VCp (e.g., the other front vehicle VCo and the other rear vehicle VCb) are not present (No) as a result of the determination, the control processing unit 5 may execute processing S8 next.

In the processing S4, the control processing unit 5 may determine whether the avoidance steering by the avoidance steering unit 53 is necessary. More specifically, for example, when it is determined that the other front vehicle VCo is present by the detection processing unit 52, the avoidance steering unit 53 may first acquire a risk determination index TCC (e.g., TCC = relative distance / relative speed) based on the relative position (e.g., the relative direction and the relative distance) and the relative speed that are acquired from the output signals of the first radar apparatus 1-1 and are stored when the lane is changed to the right side. Then, the avoidance steering unit 53 may determine whether the avoidance steering is necessary by determining whether the acquired risk determination index TCC satisfies a front-side risk determination condition Thttc1 < TCC < Thttc2. When it is determined by the detection processing unit 52 that the other rear vehicle VCb is present, the avoidance steering unit 53 may acquire the risk determination index TCC (e.g., TCC = relative distance / relative speed) based on the relative position (e.g., the relative direction and the relative distance) and the relative speed that are acquired from the output signals of the third radar apparatus 1-3 and are stored. Then, the avoidance steering unit 53 may determine whether the avoidance steering is necessary by determining whether the acquired risk determination index TCC satisfies the rear-side risk determination condition Thttc3 < TCC < Thttc4. When the front-side risk condition or the rear-side risk condition is satisfied and it is determined that the avoidance steering is necessary (Yes) as a result of the determination, the control processing unit 5 may execute processing S5 next. Meanwhile, when the front-side risk condition and the rear-side risk condition are not satisfied and it is determined that the avoidance steering is unnecessary (No) as a result of the determination, the control processing unit 5 may execute processing S8 next.

In the processing S5, the control processing unit 5 may determine whether conditions for stopping the steering control are satisfied by the function stopping unit 54. More specifically, the function stopping unit 54 may detect the lane markers from the image acquired from the image pickup apparatus 2 in the processing S2, may acquire the host lane in which the host vehicle VCs travels, may acquire the center position of the host vehicle VCs in the vehicle width direction with respect to the acquired host lane, and may acquire the positions separated from the acquired center position by a vehicle half width to the one side and the other side, to thereby set border lines BLR and BLL of the host vehicle VCs in the vehicle width direction and set the determination region between the lane marker and the border line. For example, in the example illustrated in FIG. 4, the function stopping unit 54 may detect the second and third lane markers LM2 and LM3 from the image acquired from the image pickup apparatus 2 in the processing S2, may acquire the second lane DW2 partitioned by the second and third lane markers LM2 and LM3 as the host lane in which the host vehicle VCs travels, may acquire a center position Pc of the host vehicle VCs in the vehicle width direction with respect to the acquired second lane DW2, and may acquire the positions separated from the center position Pc by a vehicle half width Wc/2 to the one side (e.g., right side) and the other side (e.g., left side), to thereby set both of the border lines BLR and BLL of the host vehicle VCs in the vehicle width direction, set the determination region DLA between the second lane marker LM2 and the border line BLL, and set the determination region DRA between the third lane marker LM3 and the border line BLR. Note that the disposing position (or the pixel position equivalent to the center position Pc on the image) of the image pickup apparatus 2 in the vehicle VC and a vehicle width Wc (or the pixel number equivalent to the vehicle width Wc on the image) may be stored in the storage unit 11 as one of the predetermined various data.

Known processing methods may be used for processing for extracting the lane markers from the image. For example, as disclosed in Japanese Patent Laid-Open No. 2008-56136, white lines may be acquired with use of a template matching method of preparing a template image indicating white lines that are lane markers in advance and detecting the white line positions by performing matching between the template image and an image acquired by a camera. Alternatively, for example, as disclosed in Japanese Patent Laid-Open No. 7-85249, the brightness change may be searched in the lateral direction in a white line searching area, a portion with extremely small brightness change may be determined to be a road portion, and a portion with a large brightness change adjacent to the road portion with extremely small brightness change may be determined to be the white line that is the lane marker. Alternatively, for example, as disclosed in Japanese Patent Laid-Open No. 2007-220013, a structure that is a candidate for a white line that is a lane marker may be detected from an image on a traveling path by performing edge detection. Then, it may be determined whether predetermined structures are present in a plurality of predetermined relative positions with respect to the position of the structure that is a candidate for the white line. It may further be determined whether the structure that is a candidate for the white line is a white line based on the determination result. Now, the plurality of predetermined relative positions and the predetermined structures may be defined based on specific relative position relationships of a plurality of structures on the road.

The function stopping unit 54 may acquire, for the other vehicle VCp determined by the detection processing unit 52 to be present, the position of the other vehicle VCp after the elapse of a predetermined period, and may determine whether the acquired position of the other vehicle VCp is in the determination region and whether the other vehicle VCp has passed the determination region. In more detail, when it is determined that the other front vehicle VCo is present, the function stopping unit 54 may acquire the position Pot of the other front vehicle VCo after the elapse of a predetermined period (e.g., a specified time period), and may determine whether the acquired position Pot of the other front vehicle VCo is in the determination region and whether the acquired position Pot of the other front vehicle VCo has passed the determination region. Meanwhile, when it is determined that the other rear vehicle VCb is present, the function stopping unit 54 may acquire the position Pbt of the other rear vehicle VCb after the elapse of a predetermined period (e.g., a specified time period), and may determine whether the acquired position Pbt of the other rear vehicle VCb is in the determination region and whether the acquired position Pbt of the other rear vehicle VCb has passed the determination region. Note that, in the calculation in the relative moving direction, the relative position of the other vehicle VCp acquired and stored in the previous processing S2 and the relative position of the other vehicle VCp acquired and stored in the current processing S2 may be used, for example, or the relative position of the other vehicle VCp may be further acquired from the radar apparatuses 1 and used in the processing S5 in addition to the relative position of the other vehicle VCp acquired and stored in the current processing S2, for example. When it is determined that the conditions for stopping the steering control are satisfied (Yes) by determining that the acquired position of the other vehicle VCp is in the determination region or has passed the determination region as a result of the determination, the control processing unit 5 may cause the function stopping unit 54 to execute processing S6 for stopping the avoidance steering function (e.g., the OCP or the BSP) performed by the avoidance steering unit 53 next, and may end the processing. Meanwhile, when it is determined that the conditions for stopping the steering control are not satisfied (No) by determining that the acquired position of the other vehicle VCp is not in the determination region and has not passed the determination region as a result of the determination, the control processing unit 5 may execute processing S7 next.

In the processing S7, the control processing unit 5 may execute the avoidance steering function by the avoidance steering unit 53 and may end the processing. More specifically, the avoidance steering unit 53 may control the steering unit 8 so that the steering toward the lane that is the destination of the change returns to the original lane in which the host vehicle VCs has been traveling. As a result, the host vehicle VCs may travel the traveling path ML1 illustrated in FIG. 3B, for example, in the execution of the OCP, and the host vehicle VCs may travel the traveling path ML2 illustrated in FIG. 3C, for example, in the execution of the BSP.

In the processing S8, the control processing unit 5 may determine whether the lane change has ended in accordance with the output signal of the direction switching detection unit 4. When the lane change has not ended (No) as a result of the determination, the control processing unit 5 may return the processing to the processing S2. Meanwhile, when the lane change has ended (Yes) as a result of the determination, the control processing unit 5 may end the processing.

Note that each of the processing described above may be repeatedly executed during the lane change in the description above, but each of the processing described above may also be executed once when the start of the lane change is detected. In this case, the processing S8 described above may be omitted. When it is determined that the lane that is the other vehicle is not present in the destination of the change (No) in the processing S3 and it is determined that the avoidance steering is unnecessary (No) in the processing S4, the control processing unit 5 may end the processing.

As described above, the travel control apparatus D and a travel control method implemented thereby in this embodiment can stop the avoidance steering function when the position of the other vehicle VCp after the elapse of a predetermined period (e.g., a specified time period) is in the determination regions DRA and DLA or has passed the determination regions DRA and DLA. The control that returns the steering from the traveling lane of the host vehicle VCs toward the lane that is the destination of the change to the traveling lane of the host vehicle VCs in order to avoid contact and/or abnormal approach between the host vehicle VCs and the other vehicle VCp at the time of lane change may be stopped. Therefore, the travel control apparatus D and/or the travel control method can prevent the host vehicle VCs from traveling in an unpredictable manner for a driver of the other vehicle VCp, thereby reducing the risk of an accident between the host vehicle VCs and the other vehicle VCp. Thus, the travel control apparatus D and/or the travel control method can improve safety for the host vehicle VCs and the other vehicle VCp. Further, in some circumstances, the travel control apparatus D and/or the travel control method can also reduce the discomfort of the passenger on the other vehicle VCp.

In the lane change while traveling, the lane may be changed to the opposite lane in order to overtake the preceding vehicle. When the avoidance steering unit 53 controls the host vehicle VCs for the other front vehicle VCo traveling in the opposite lane as described above with reference to FIG. 3B, for example, a determination region DRL used by the function stopping unit 54 may need to be set to a place ahead of the host vehicle VCs as described above with reference to FIG. 4, for example. Meanwhile, on a road having a plurality of lanes on one side, the lane may be changed to an adjacent lane in order to switch lanes in the lane change while traveling. When the avoidance steering unit 53 controls the host vehicle VCs for the other rear vehicle VCb traveling in the adjacent lane as described above with reference to FIG. 3C, for example, the determination region DLA used by the function stopping unit 54 may need to be set to a place behind the host vehicle VCs as described above with reference to FIG. 4, for example. In the travel control apparatus D and the travel control method, the determination regions DRA and DLA may be set to at least one of a place ahead of the host vehicle VCs and a place behind the host vehicle and to both in this exemplary embodiment, and hence the function stopping unit 54 can be combined with at least one of the avoidance steering unit 53 that controls the host vehicle VCs for the other front vehicle VCo traveling in the opposite lane, and the avoidance steering unit 53 that controls the host vehicle VCs for the other rear vehicle VCb traveling in the adjacent lane, and with both in this exemplary embodiment.

Note that, in the above-mentioned embodiment, the function stopping unit 54 may further stop the avoidance steering function when the other vehicle is present on the side of the host vehicle in the direction opposite from the direction of the lane change of the host vehicle based on the detection result of the other-vehicle detecting unit (which may be considered as a first variation).

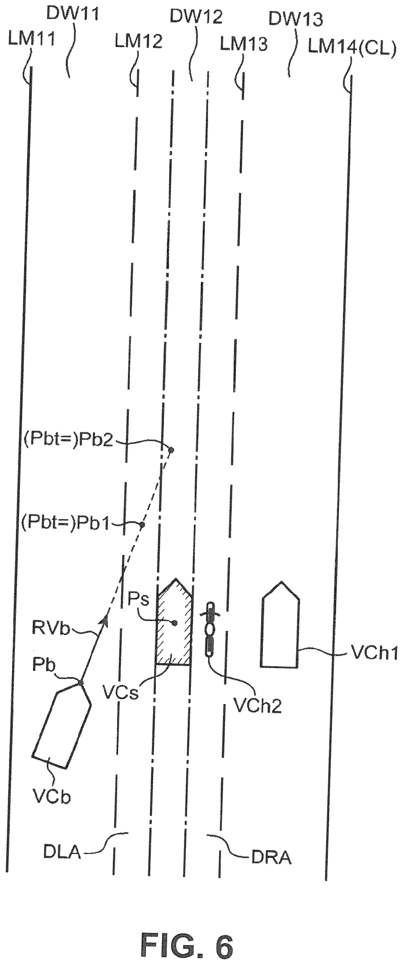

FIG. 6 illustrates an exemplary variation of the travel control apparatus. For example, as illustrated in FIG. 6, on a road (e.g., traveling path) with three lanes on one side having first to third lanes DW11 to DW13 partitioned by first to fourth lane markers LM11 to LM14, when the host vehicle VCs traveling in the second lane DW12 changes lanes to the first lane DW11 on the left side in order to overtake a preceding vehicle or avoid an obstacle ahead of the host vehicle VCs, for example, the function stopping unit 54 may stop the avoidance steering function when the other vehicle VCp is present on the side of the host vehicle VCs in the left direction that is the direction opposite from the right direction of the lane change of the host vehicle VCs based on the detection result of the detection processing unit 52 and the first and third radar apparatuses 1-1 and 1-3. In more detail, the control processing unit 5 may determine whether an other side vehicle VCh2 such as a two-wheeled vehicle is present on the right side of the host vehicle VCs in the host lane DW12, for example, or an other side vehicle VCh1 is present on the right side of the host vehicle VCs in the third lane DW13 adjacent to the host vehicle VCs on the right side thereof, for example, by the detection processing unit 52 from the output signals of the first and third radar apparatuses 1-1 and 1-3. When the other side vehicle VCh (e.g., VCh1 or VCh2 in this example) is present on the side of the host vehicle VCs as a result of the determination, the function stopping unit 54 may cause the avoidance steering unit 53 to stop the avoidance steering function (e.g., BSP). Meanwhile, when the other side vehicle VCh is not present on the side of the host vehicle VCs as a result of the determination, in this specific example, the function stopping unit 54 does not cause the avoidance steering unit 53 to stop the avoidance steering function (e.g., BSP) by not causing the avoidance steering unit 53 to execute the processing of causing the function stopping unit 54 to stop the avoidance steering function (e.g., BSP). Note that the other side vehicle VCh may be the other side vehicle VCh2 traveling in the host lane or the other side vehicle VCh1 traveling in the adjacent lane in the example illustrated in FIG. 6, but may be the other vehicle VCp traveling a so-called road shoulder.

When the steering toward the lane that is the destination of the change from the traveling lane of the host vehicle VCs is returned to the traveling lane of the host vehicle VCs by the execution of the avoidance steering function, the possibility of the host vehicle VCs approaching the other side vehicle VCh traveling on the side of the host vehicle VCs in the direction opposite from the direction of the lane change of the host vehicle VCs may be high. In particular, there may be a possibility that the relative speed of the other side vehicle VCh is near 0 km/h, and the possibility of the host vehicle VCs approaching the other side vehicle VCh may become higher by executing the avoidance steering function. The travel control apparatus D and the travel control method in the first variation as stated above may stop the control of the steering by the avoidance steering unit 53 when the other side vehicle VCh is present on the side of the host vehicle VCs, and hence can prevent the host vehicle VCs from traveling in an unpredictable manner for a driver of the other side vehicle VCh, thereby reducing the risk of an accident between the host vehicle and the other side vehicle. The travel control apparatus D and the travel control method in the first variation can, in some circumstances, also reduce the discomfort of the passenger on the other side vehicle VCh.

Therefore, when the travel control apparatus D determines whether the avoidance steering function is to be stopped, the travel control apparatus D may prioritize the determination result for the presence of the other side vehicle VCh over the determination result for the determination regions DRA and DLA. In other words, the travel control apparatus D may stops the avoidance steering function when the other side vehicle VCh is present regardless of the determination result for the determination regions DRA and DLA. In other words, the determination processing for the presence of the other side vehicle VCh may be executed before the determination processing for the determination regions DRA and DLA.

In the abovementioned embodiment, the movement of the other vehicle may be expressed by relative speed vectors of which components are the relative position, the relative speed, and the relative moving direction as described above, and further the function stopping unit 54 does not necessarily need to stop the avoidance steering function when the distance between the host vehicle and the other vehicle continues to be equal to or more than a predetermined threshold (e.g., duration time determination threshold) for a second predetermined period based on the detection result of the other-vehicle detecting unit and based on the detection result of the radar apparatuses 1 and the detection processing unit 52 in the description above (which may be considered as a second variation). In this case, for example, first, the control processing unit 5 may constantly acquire the distance (e.g., vehicular gap) between the host vehicle VCs and the other vehicle VCp at predetermined sampling intervals based on the detection result of the radar apparatuses 1 and the detection processing unit 52, and may acquire a duration time in which the acquired distance is equal to or more than the duration time determination threshold. After the start of the lane change is detected, the control processing unit 5 may determine whether the distance between the host vehicle VCs and the other vehicle VCp continues to be equal to or more than the duration time determination threshold for the second predetermined period with use of the acquired duration time when the function stopping unit 54 determines whether the conditions for stopping the steering control are satisfied in the processing S5. When it is determined that the conditions for stopping the steering control are satisfied as a result of the determination, the control processing unit 5 may execute the processing S6 next. Meanwhile, when it is determined that the conditions for stopping the steering control are not satisfied or that the distance continues to be equal to or more than the duration time determination threshold for the second predetermined period as a result of the determination, the control processing unit 5 may execute the processing S7 next. The second predetermined period and the duration time determination threshold may be set to appropriate values from a plurality of samples in advance.

When the distance between the host vehicle VCs and the other vehicle VCp continues to be equal to or more than the duration time determination threshold for a predetermined period, the distance between the host vehicle VCs and the other vehicle VCp may be maintained even when the host vehicle VCs executes the avoidance steering function. Therefore, there may be no fear of contact and/or abnormal approach or fear of causing the host vehicle to travel in an unpredictable manner for the drier of the other vehicle (which may increase the risk of accident and/or discomfort of the driver of the other vehicle). The travel control apparatus D and the travel control method in the second variation as stated above execute and do not stop the avoidance steering function when the distance between the host vehicle VCs and the other vehicle VCp continues to be equal to or more than the duration time determination threshold for the predetermined period, and hence the original avoidance steering function can be exhibited.

### Reference Signs List

- D: Travel control apparatus
- VC: Vehicle
- VCs: Host vehicle
- VCo: Other front vehicle
- VCb: Other rear vehicle
- VCh1,: VCh2 Other side vehicle
- 1 (1-1 to 1-4): Radar apparatuses
- 2: Image pickup apparatus
- 3: Vehicle speed measurement unit
- 4: Direction switching detection unit
- 5: Control processing unit
- 6a: Power unit
- 6b: Power transmission unit
- 7: Braking unit
- 8: Steering unit
- 11: Storage unit
- 51: Controller
- 52: Detection processing unit
- 53: Avoidance steering unit
- 54: Function stopping unit

## Claims

1. A travel control apparatus (D) having an avoidance steering function for controlling steering, when a host vehicle (VCs) changes lanes, so as to avoid contact and/or abnormal approach of the host vehicle (VCs) with respect to another vehicle traveling in a lane that is a destination of change for the host vehicle (VCs), the travel control apparatus (D) comprising:
an other-vehicle detecting unit (1, 52) configured to detect whether the other vehicle is present and further detect a movement of the other vehicle when the other vehicle is present; and
a function stopping unit (54) configured to stop the avoidance steering function in one of the following cases:
a position of the other vehicle after an elapse of a specified time period is in a determination region, the specified time period being acquired based on a detection result of the other-vehicle detecting unit (1, 52), the determination region being a region that is in a host lane on an outer side of the host vehicle (VCs) in a vehicle-width-direction and that extends in an extending direction of the host lane, the host lane being a lane in which the host vehicle (VCs) travels; or
the position of the other vehicle has passed the determination region.

2. The travel control apparatus (D) according to claim 1, wherein the determination region is set ahead of the host vehicle (VCs) and/or behind the host vehicle (VCs).

3. The travel control apparatus (D) according to claim 1 or claim 2, wherein the function stopping unit (54) is further configured to stop the avoidance steering function when, based on the detection result of the other-vehicle detecting unit (1, 52), the other vehicle is present on a side of the host vehicle (VCs) in a direction opposite from a direction of lane change of the host vehicle (VCs).

4. The travel control apparatus (D) according to any one of claims 1 to 3, wherein:
the movement of the other vehicle is expressed by a relative speed vector; and
the function stopping unit (54) is further configured not to stop the avoidance steering function when, based on the detection result of the other-vehicle detecting unit (1, 52), a distance between the host vehicle (VCs) and the other vehicle continues to be equal to or more than a predetermined threshold for a predetermined time period.

5. A travel control method having an avoidance steering function for controlling steering, when a host vehicle (VCs) changes lanes, so as to avoid contact and/or abnormal approach of a host vehicle with respect to another vehicle traveling in a lane that is a destination of change for the host vehicle, the travel control method comprising:
an other-vehicle detecting step of detecting whether the other vehicle is present and further detecting a movement of the other vehicle when the other vehicle is present; and
a function stopping step of stopping the avoidance steering function in one of the following cases:
a position of the other vehicle after an elapse of a specified time period is in a determination region, the specified time period being acquired based on a detection result of the other-vehicle detecting step, the determination region being a region that is in a host lane on an outer side of the host vehicle (VCs) in a vehicle-width-direction and that extends in an extending direction of the host lane, the host lane being a lane in which the host vehicle (VCs) travels; or
the position of the other vehicle has passed the determination region.

6. The method according to claim 5, wherein the determination region is set ahead of the host vehicle (VCs) and/or behind the host vehicle (VCs).

7. The method according to claim 5 or claim 6, wherein the function stopping step further includes:
stopping the avoidance steering function when, based on the detection result of the other-vehicle detecting unit (1, 52), the other vehicle is present on a side of the host vehicle (VCs) in a direction opposite from a direction of lane change of the host vehicle (VCs).

8. The method according to any one of claims 5 to 7, wherein:
the movement of the other vehicle is expressed by a relative speed vector; and
in the function stopping step, the avoidance steering function is not stopped when, based on the detection result of the other-vehicle detecting unit (1, 52), a distance between the host vehicle (VCs) and the other vehicle continues to be equal to or more than a predetermined threshold for a predetermined time period.

9. A computer program product comprising computer-readable instructions that, when loaded and run on a computer, cause the computer to perform the method according to any one of claims 5 to 8.
